# EUROPÄISCHE PATENTSCHRIFT

(11) **EP 1 586 675 B1**
(45) Veröffentlichungstag und Bekanntmachung des Hinweises auf die Patenterteilung: **25.03.2009**
(21) Anmeldenummer: 04009101.9
(22) Anmeldetag: 16.04.2004
(51) Int. Cl.: C23C 18/08, C23C 18/12, C23C 20/04, C23C 20/08

(54) **Verfahren zur Innenbeschichtung eines Bauteils mit einem Hohlraum**
Method for coating the interior of a hollow component
Procédé de revêtement de l'intérieur d'un corps creux

(43) Veröffentlichungstag der Anmeldung: 19.10.2005
(73) Patentinhaber: SIEMENS AKTIENGESELLSCHAFT, 80333 München (DE)
(72) Erfinder: Jabado, Rene, 14199 Berlin (DE); Krüger, Ursus, Dr., 14089 Berlin (DE); Kutzer, Volkmar, Dr., 12157 Berlin (DE); Körtvelyessy, Daniel, 13467 Berlin (DE); Reiche, Ralph, 13465 Berlin (DE); Rindler, Michael, 15566 Schöneiche (DE); Ullrich, Raymond, 14621 Schönwalde (DE)

(56) Entgegenhaltungen:
- WO-A-02/061791
- US-A- 4 018 944
- US-A- 5 254 413

## Beschreibung

Die Erfindung betrifft ein Verfahren zur Beschichtung einer inneren Oberfläche eines Bauteils mit einem Hohlraum gemäß Anspruch 1.

Bauteile, die einen Hohlraum aufweisen, werden auch oft im Inneren beschichtet. Dies erfolgt im allgemeinen durch einen CVD-Prozess, bei dem metallhaltige, beispielsweise aluminium- oder chromhaltige Precursor, in den Hohlraum eingeleitet werden, wobei aufgrund einer chemischen Reaktion bedingt durch eine Temperaturerhöhung, eine chemische Reaktion, stattfindet, die eine Gasphase der Metalle erzeugt. Die Gasphase schlägt sich auf den Innenflächen des Hohlraums nieder, so dass eine Beschichtung entsteht.

Die US 5,254,413 offenbart ein Verfahren zur Beschichtung eines Lochs, in dem in das Loch ein Füllmaterial aus Keramik und Aluminium eingefüllt und erhitzt wird, so dass sich eine Aluminiumbeschichtung ergibt. Die keramischen Bestandteile zersetzen sich nicht und müssen am Ende des Verfahrens entfernt werden.

Ähnliche Anwendung findet ein solches Verfahren bei der Innenbeschichtung von Kühlkonfigurationen und/oder Durchgangsöffnungen wie zum Beispiel Kühlluftkanälen von Turbinenkomponenten, insbesondere Gasturbinenkomponenten. Solche Kühlluftkanäle werden zum Schutz vor Korrosion mit Aluminium und/oder Chrom beschichtet, das beispielsweise in das Substrat eindiffundiert. Diese Beschichtung wird während des Betriebs aufoxidiert. Die dabei entstehende Oxidschicht verhindert dabei einen weiteren korrosiven Angriff auf das Substrat der Schaufel. Im Falle einer Aluminiumbeschichtung (Innenalitierung) wird das Aluminium größtenteils in Aluminiumoxid (Al₂O₃) umgewandelt und stoppt damit einen weiteren Angriff auf die inneren Oberflächen der Kühlluftkanäle. Da insbesondere die mäanderförmigen Kühlluftkanäle im Innern einer Turbinenschaufel zum Teil eine erhebliche Länge aufweisen, stellt die gleichmäßige Beschichtung der inneren Oberflächen ein Problem dar. Insbesondere die vollständige Bedeckung der gesamten inneren Oberfläche als auch das Erzielen einer gleichmäßigen Schichtdicke vom Einlass bis zum Auslaß der Kühlluftkanäle kann in den bisherigen CVD-Prozessen nur schwerlich garantiert werden. Ursache dafür ist zum Beispiel die erhebliche Abnahme an Metallkonzentration in der Gasphase über die Länge des zu beschichten Kanals.

Es ist daher Aufgabe der Erfindung, ein Verfahren zur Innenbeschichtung aufzuweisen, die dieses Problem überwinden.

Die Aufgabe wird gelöst durch ein Verfahren gemäß Anspruch 1.

In den Unteransprüchen sind weitere vorteilhafte Maßnahmen aufgelistet, die in vorteilhafter Art und Weise miteinander kombiniert werden können.

Es zeigen
- Figur 1, 2: beispielhafte Bauteile, bei denen das erfindungsgemäße Verfahren angewendet werden kann,
- Figur 3: erfindungsgemäße Verfahrensschritte,
- Figur 4: eine dadurch beispielhaft erzeugte Beschichtung,
- Figur 5: eine Turbinenschaufel,
- Figur 6: eine Brennkammer,
- Figur 7: eine Kühlkonfiguration und
- Figur 8: eine Gasturbine.

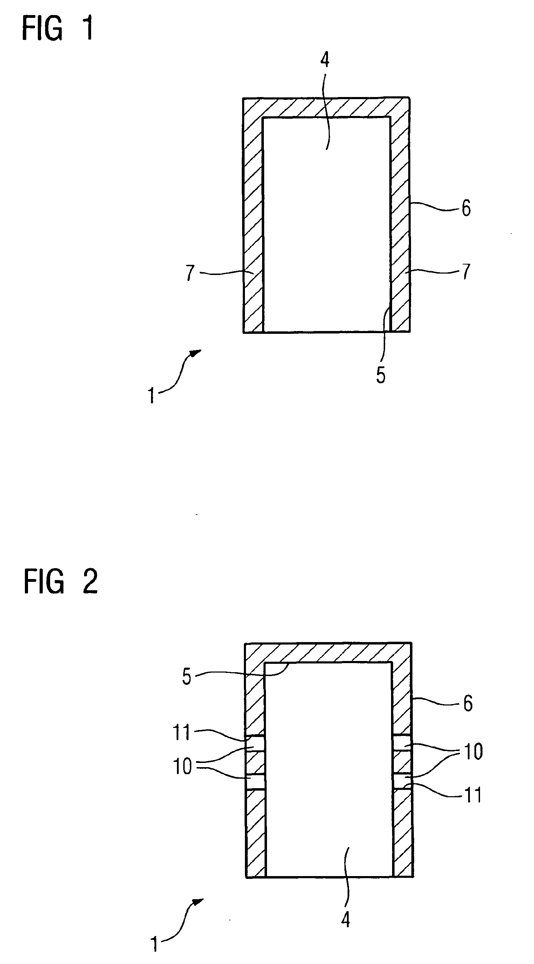

Figur 1 zeigt ein Bauteil 1, das einen Hohlraum 4 und Außenwände 7 aufweist.

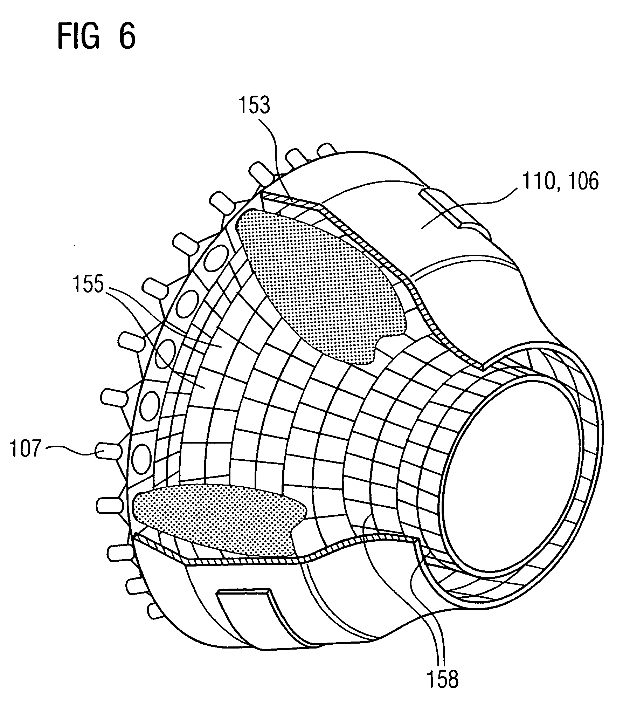

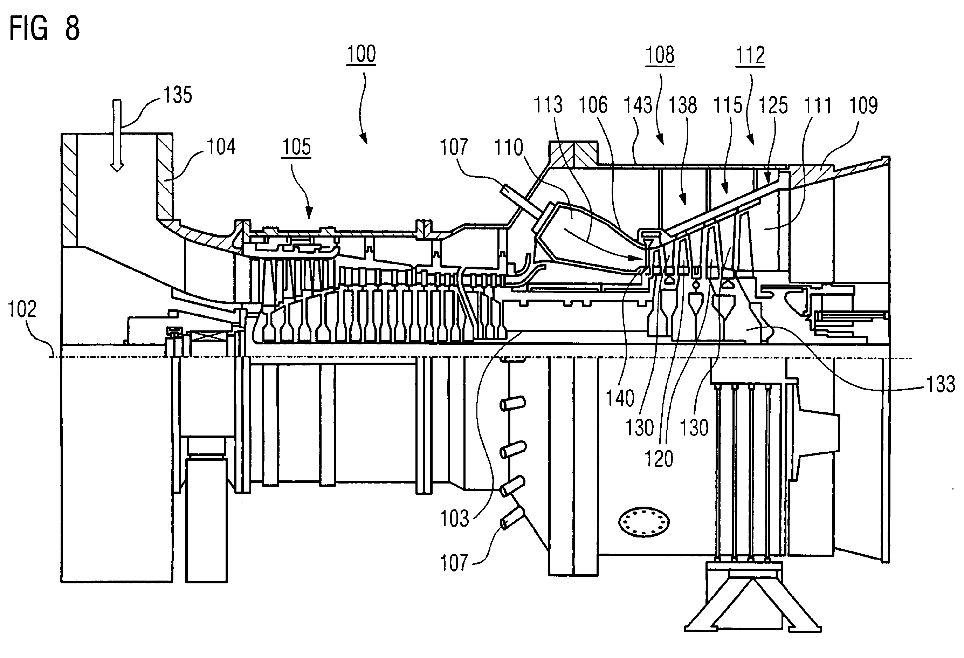

Dies ist zum Beispiel eine Turbinenschaufel 120, 130 einer Turbine 100 (Fig. 8) (Dampf-, Gasturbine) oder Brennkammerelemente 155 (Fig. 6) einer Turbine 100.

Die Außenwand 7 weist eine innere Oberfläche 5, die beschichtet werden soll, und eine äußere Oberfläche 6 auf.

Figur 2 zeigt ein weiteres Bauteil 1, bei der das erfindungsgemäße Verfahren angewendet werden kann.

Ausgehend von Figur 1 weist das Bauteil 1 Kühlluftkanäle oder Durchgangslöcher 10 auf, die an der Innenfläche 11 beschichtet werden sollen.

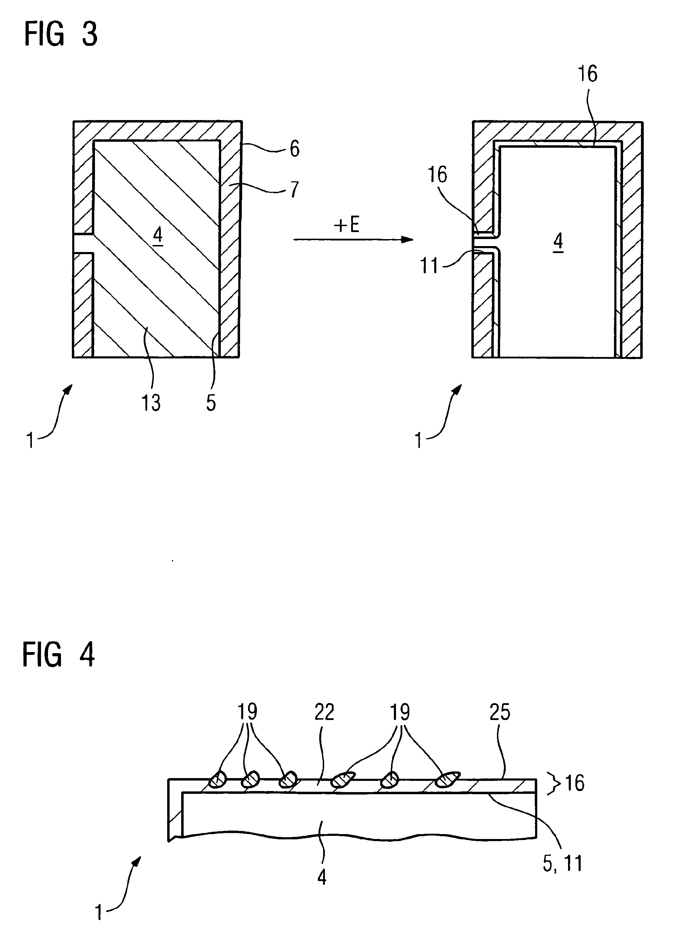

Figur 3 zeigt einen beispielhaften Ablauf des erfindungsgemäßen Verfahrens.

In den Hohlraum 4 bzw. die innere Kühlkonfiguration und/oder in die Kühlluftkanäle 10 wird eine Paste 13 eingebracht, beispielweise eingespritzt.

Die Paste 13 besteht aus einem Trägermaterial und einem Beschichtungsmaterial, das in dem Trägermaterial vorhanden ist, bspw. indem Trägermaterial und Beschichtungsmaterial miteinander vermischt sind.
Das Beschichtungsmaterial ist bspw. gleichmäßig in dem Trägermaterial verteilt.

Das Beschichtungsmaterial weist eine bestimmte Zersetzungs- oder Verdampfungstemperatur auf, bei der das Trägermaterial nicht mehr thermisch stabil ist, also sich zersetzt oder verdampft.

Das Trägermaterial ist bei Raumtemperatur thermisch stabil, d.h. es zersetzt sich nicht.

Insbesondere ist das Beschichtungsmaterial in Form von Mikro- und/oder Nanopartikeln (< 1 Mikrometer, insbesondere < 500 oder 100 Nanometer) in dem Trägermaterial vorhanden und kann metallisch oder keramisch sein.
Vorteilhaft ist die Verwendung von Nanopartikeln, die die Matrix der zu erzeugenden Beschichtung 16 ergeben, d.h. das Beschichtungsmaterial wird größtenteils (bspw. >= 50%) oder ganz aus Nanopartikel gebildet.
Ebenso können die Nanopartikel eine Verdichtung der Mikrometerpartikeln (> 1 Mikrometer, insbesondere > 10 Mikrometer) der Beschichtung 16 fördern, wenn das Beschichtungsmaterial größtenteils (bspw. >= 50%) aus Mikrometer großen Partikeln besteht.

Ebenso kann das Beschichtungsmaterial mehrere metallische und/oder keramische Elemente oder Komponenten aufweisen, wie zum Beispiel die Legierungsbestandteile einer MCrAlY-Beschichtung.

Das Trägermaterial ist ein Polymer, insbesondere ein Polyurethan.

Vorteilhafterweise lässt sich das Verfahren bei der Innenalitierung und/oder Innenchromierung anwenden.

Nachdem die Paste 13 in den Hohlraum 4 bzw. in die Kühlkonfiguration und/oder den Kühlluftkanal 10 eingebracht wurde, wird dem Bauteil 1 mit der Paste 13 Energie E zugeführt, beispielsweise thermische Energie, wobei die Erwärmung im Vakuumofen stattfinden kann, wenn eine Oxidation des Bauteils 1 vermieden werden soll.
Aufgrund der Wärmezufuhr zersetzt sich das Trägermaterial und das Beschichtungsmaterial tritt in eine Gasphase über und schlägt sich auf den inneren Oberflächen 5, 11, nieder, so dass sich dort eine Beschichtung 16 bildet.
Das sich zersetzende Trägermaterial kann abgepumpt werden.

Zur besseren Anbindung kann eine Wärmebehandlung mit der Beschichtung 16 durchgeführt werden oder die Beschichtung 16 wird größtenteils in das Substrat oder Wand 7 des Bauteils 1, 120, 130, 155 eindiffundieren gelassen.

Wenn dem Trägermaterial zusätzlich zu dem Beschichtungsmaterial ein Grobmaterial 19 beigefügt wird, so bildet sich bspw. eine Mikro/Makro-Struktur gemäß Figur 4.

Das Grobmaterial 19 weist eine Partikelgröße im Mikrometerbereich auf und ist damit erheblich größer als die beispielhaft verwendeten Nanopartikel für das Beschichtungsmaterial. Die Temperatur bei der Gasphasenbildung des Beschichtungsmaterials kann so gewählt werden, dass das Grobmaterial 19, das beispielsweise aus demselben Material wie das Beschichtungsmaterial besteht, sich aufgrund seiner größeren Partikelform nicht so schnell in eine Gasphase umsetzt und als gröberes Teilchen in einer Matrix der Beschichtung 16 eingebaut wird.

Ebenso kann das Beschichtungsmaterial metallisch sein und das Grobmaterial 19 ist ein bei der Verdampfungstemperatur des Metalls stabiles Material, wie beispielsweise eine Keramik (beispielsweise Aluminiumoxid), so dass das Grobmaterial 19 in die Beschichtung 16 eingebaut wird, so dass es dort eine Sekundärphase bildet.
Dadurch wird bspw. der abrasive Widerstand der Beschichtung 16 erhöht.

Die sich daraus ergebende Beschichtung 16 kann aber auch bspw. rau sein und enthält also Teilchen 19, die aus einer Oberfläche 25 einer feiner als die Grobteilchen 19 strukturierten Matrixbeschichtung 22 hervorragen und somit turbulente Strömungen erzeugen, wenn ein Medium an der Oberfläche vorbeiströmt, so dass der Strömungswiederstand verringert wird.

Das Verfahren lässt sich auch zur Außenbeschichtung verwenden, in dem das Gemisch 13 aus Trägermaterial und Beschichtungsmaterial auf eine äußere Oberfläche 6 aufgetragen und erwärmt wird. Dabei muss gegebenenfalls durch eine weitere Deckbeschichtung gewährleistet sein, dass das sich bildende gasförmige Beschichtungsmaterial auf der Oberfläche 6 abscheidet und nicht entweicht.

Insbesondere weist die Paste 13 keinen Aktivator (siehe Diskussion Stand der Technik der US 5,254,413) auf, wie er bei einem Beschichtungsverfahren verwendet wird, bei dem Aluminium und ein Halogenid als Aktivator verwendet wird, so dass sich gasförmiges Aluminiumfluorid bildet, das zur Abscheidung von Aluminium auf einer Oberfläche führt.

Ebenso weist die Paste 13 keine Füllmaterialien auf, die am Ende des Verfahrens entfernt werden müssen, d.h. das Trägermaterial hat sich vollständig zersetzt und verflüchtigt und das Beschichtungsmaterial hat sich zumindest größtenteils oder ganz als Beschichtung 16, 22 niedergeschlagen.

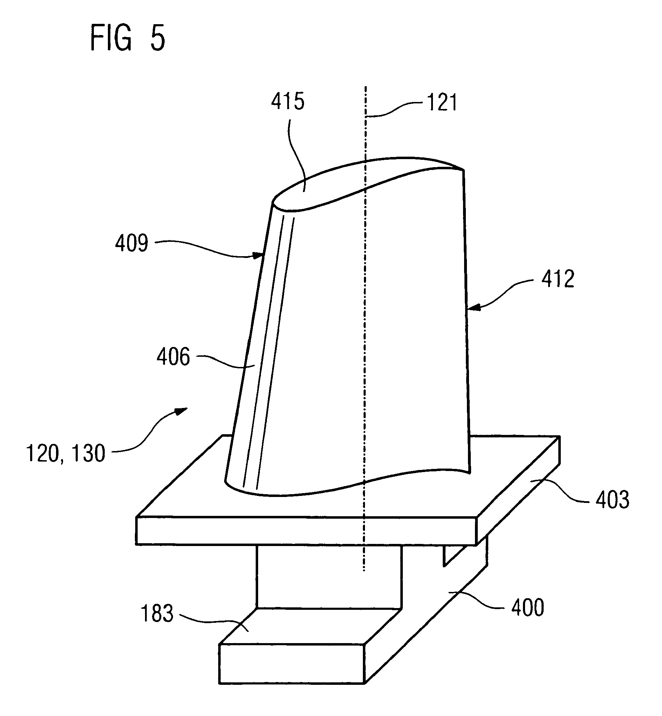

Figur 5 zeigt in perspektivischer Ansicht eine Schaufel 120, 130, die sich entlang einer Längsachse 121 erstreckt.

Die Schaufel 120 kann eine Laufschaufel 120 oder Leitschaufel 130 einer Strömungsmaschine 100 sein. Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist bspw. als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 bspw. massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl und innen gemäß oben beschriebenen Verfahren beschichtet werden oder massiv ausgeführt sein.
Wenn die Schaufel 120, 130 gekühlt werden soll, ist sie hohl und weist ggf. noch Filmkühllöcher (nicht dargestellt) auf. Als Schutz gegen Korrosion weist die Schaufel 120, 130 bspw. entsprechende meistens metallische Beschichtungen auf und als Schutz gegen Wärme meistens noch eine keramische Beschichtung.

Die Figur 6 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

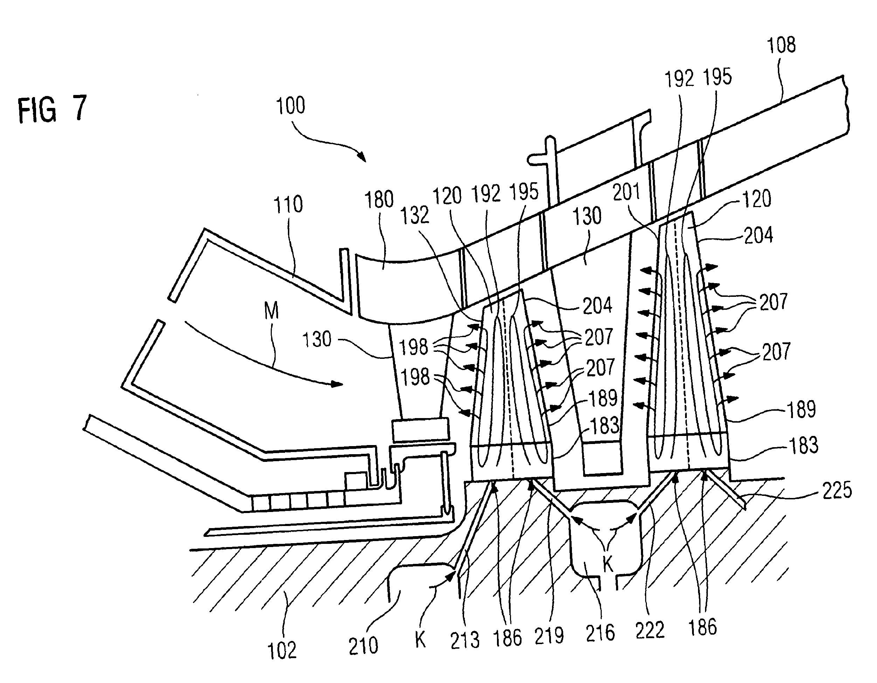

Figur 7 zeigt schematisch, wie Turbinenschaufeln gekühlt werden. Zur Erzielung eines vergleichsweise hohen Wirkungsgrades ist die Gasturbine 100 für eine vergleichsweise hohe Austrittstemperatur des aus der Brennkammer 110 austretenden Arbeitsmediums M von etwa 1200 °C bis 1300 °C ausgelegt. Um dies zu ermöglichen, sind zumindest einige der Laufschaufeln 120 und der Leitschaufeln 130 durch Kühlluft K als Kühlmedium kühlbar ausgelegt. In Figur 7 ist erkennbar, dass das aus der Brennkammer 110 abströmende Arbeitsmedium M zunächst auf eine Anzahl von Leitschaufeln 130 trifft, die die sogenannte erste Leitschaufelreihe 115 bilden und über ihre jeweilige Plattform 180 in die Brennkammer 110 eingehängt sind. In Strömungsrichtung des Arbeitsmediums M gesehen folgen sodann die die erste Laufschaufelreihe bildenden Laufschaufeln 120, die die zweite Laufschaufelreihe bildenden Leitschaufeln 130, sowie die die zweite Laufschaufelreihe bildenden Laufschaufeln 120.

Die Laufschaufeln 120 sind für eine besonders zuverlässige Bespeisung mit Kühlluft K im wesentlichen über den gesamten Sockelquerschnitt ihres jeweiligen Schaufelfußes 183 hinweg ausgebildet. Dazu ist der Schaufelfuß 183 der jeweiligen Laufschaufel 120 jeweils mit einer Mehrzahl von Einströmöffnungen 186 für Kühlluft K versehen. Die Einströmöffnungen 186 jeder Laufschaufel 120 sind dabei beispielsweise in der Längsrichtung der Turbinenwelle 102 gesehen hintereinander angeordnet. Jeder Einströmöffnung 186 ist jeweils ein durch das Schaufelblatt 189 der jeweiligen Laufschaufel 120 geführter Teilkanal 192 bzw. 195 für Kühlluft K zugeordnet. Diese Teilkanäle 192, 195 können mit dem erfindungsgemäßen Verfahren beschichtet werden.
Der der in Strömungsrichtung des Arbeitsmediums M gesehen vorderen Einströmöffnung 186 zugeordnete Teilkanal 192 der jeweiligen Laufschaufel 120 ist dabei, ausgehend von der zugeordneten Einströmöffnung 186, mäanderförmig durch den vorderen Teil der jeweiligen Laufschaufel 120 geführt, wie die in der Figur lediglich schematisch dargestellt ist.

Der Teilkanal 192 mündet dabei auslassseitig in einer Anzahl von Auslassöffnungen 198 für die Kühlluft K, die an der in Strömungsrichtung des Arbeitsmediums M gesehen vorderen Kante 201 der jeweiligen Laufschaufel 120 angeordnet sind.
Im Gegensatz dazu kommuniziert die in Strömungsrichtung des Arbeitsmediums M gesehen jeweils hintere Einströmöffnung 186 der jeweiligen Laufschaufel 120 mit einem im hinteren Teil der jeweiligen Laufschaufel 120 ebenfalls mäanderförmig geführten Teilkanal 195. Der Teilkanal 195 mündet auslassseitig in einer Anzahl von an der hinteren Kante 204 der jeweiligen Laufschaufel 120 angeordneten Auslassöffnungen 207.

Die Teilkanäle 192, 195 jeder Laufschaufel 120 sind kühlluftseitig bspw. vollständig voneinander entkoppelt geführt. Somit ist die Bespeisung jedes Teilkanals 192, 195 mit hinsichtlich ihrer Betriebsparameter an die jeweiligen Erfordernisse angepasster Kühlluft K ermöglicht. Dabei kann insbesondere berücksichtigt sein, dass das Druckniveau, das die Kühlluft K im Bereich der Auslassöffnungen 198 bzw. 207 aufweisen oder übersteigen muss, abhängig ist von der Position der jeweiligen Laufschaufel 120 entlang der Turbinenwelle 102 und davon, ob der Austritt der Kühlluft K entgegen der Strömungsrichtung des Arbeitsmediums M oder in Strömungsrichtung des Arbeitsmediums M erfolgt. Daher muss insbesondere die den Auslassöffnungen 198 zugeführte Kühlluft K einen höheren Betriebsdruck aufweisen als die den Auslassöffnungen 207 zugeführte Kühlluft K.

Um beispielsweise eine getrennte Bespeisung der Teilkanäle 192, 195 mit Kühlluft K zur Einhaltung dieser unterschiedlichen Randbedingungen zu ermöglichen, ist das Kühlluftzufuhrsystem der Gasturbine 100 entsprechend angepasst. Insbesondere umfasst das Kühlluftzufuhrsystem eine in die Turbinenwelle 102 integrierte erste Vorlagekammer 210, die im Ausführungsbeispiel nach Figur über eine in der Turbinenwelle 102 geführte Bohrung 213 mit der in Längsrichtung der Turbinenwelle 102 gesehen ersten Einströmöffnung 186 jeder der die erste Laufschaufelreihe bildenden Laufschaufeln 120 verbunden ist.

Weiterhin umfasst das Kühlluftzufuhrsystem beispielsweise eine zweite Vorlagekammer 216 für Kühlluft K. Diese ist in Längsrichtung der Turbinenwelle 102 gesehen hinter der ersten Vorlagekammer 210 angeordnet und ebenfalls in die Turbinenwelle 102 integriert. Die zweite Vorlagekammer 216 ist kühlluftseitig über eine Bohrung 219 mit der in Längsrichtung der Turbinenwelle 102 gesehen hinteren Einströmöffnung 186 jeder der die erste Laufschaufelreihe bildenden Laufschaufeln 120 verbunden. Weiterhin ist die zweite Vorlagekammer 216 über eine Bohrung 222 mit der in Längsrichtung der Turbinenwelle 102 gesehen vorderen Einströmöffnung 186 jeder der die zweite Laufschaufelreihe bildenden Laufschaufeln 120 verbunden.

Für die nachfolgenden Laufschaufelreihen können noch weitere Vorlagekammern vorgesehen sein, was durch die der in Längsrichtung der Turbinenwelle 102 gesehen hinteren Einströmöffnung 186 der die zweite Laufschaufelreihe bildenden Laufschaufeln 120 zugeordneten Bohrung 225 angedeutet ist.

Bezüglich jeder individuellen Laufschaufel 120 ist durch diese Kühlluftführung gewährleistet, dass jeder Einströmöffnung 186 jeder Laufschaufel 120 jeweils eine separate, in die Turbinenwelle integrierte Kühlluftzufuhr zugeordnet ist. Jede Einströmöffnung 186 und mit ihr auch der jeweils nachgeschaltete Teilkanal 192, 195 ist somit unabhängig vom jeweils anderen Teilkanal 195 bzw. 192 mit Kühlluft K beaufschlagbar. Die somit gebildeten Teilströme an Kühlluft K können daher an die individuelle, auslassseitig vorgegebenen Bedingungen angepasst sein. Insbesondere ist der Teilkanal 192 mit im Vergleich zum Teilkanal 195 unter höherem Druck stehender Kühlluft K beaufschlagbar. Dazu wird die erste Vorlagekammer 210 mit entsprechend hochwertiger, unter vergleichsweise hohem Druck stehender Kühlluft K bespeist. Dem gegenüber wird die zweite Vorlagekammer 216, aus der der zweite Teilkanal 192 der die erste Laufschaufelreihe bildenden Laufschaufeln 120 mit Kühlluft K versorgt wird, mit vergleichsweise minderwertigerer, unter niedrigerem Druck stehende Kühlluft K bespeist. Die Gesamtmenge an hochwertiger, unter besonders hohem Druck stehende Kühlluft K kann somit vergleichsweise gering gehalten und ausschließlich auf diejenigen Bereiche der jeweiligen Laufschaufel 120 beschränkt werden, für die die Versorgung mit derart hochwertiger Kühlluft K auch tatsächlich notwendig ist.
Gemäß Figur 7 sind die Einströmöffnungen 186 der Laufschaufeln 120 im Bodenbereich des jeweiligen Schaufelfußes 183 angeordnet.

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist bspw. aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 bspw. mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden bspw. eisen-, nickel- oder kobaltbasierte Superlegierungen verwendet.
Solche Superlegierungen sind bspw. aus der EP 1204776, EP 1306454, EP 1319729, WO 99/67435 oder WO 00/44949 bekannt.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.

Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Beschichtung einer inneren Oberfläche (5, 11) eines Bauteils (1) mit einem Hohlraum (4, 10), bei dem ein Beschichtungsmaterial,
das eine bestimmte Verdampfungstemperatur aufweist, und ein bei Raumtemperatur thermisch stabiles und bei der Verdampfungstemperatur des Beschichtungsmaterials thermisch instabiles Trägermaterial verwendet wird, das das Beschichtungsmaterial enthält,
wobei ein Gemisch aus Trägermaterial und Beschichtungsmaterial in den Hohlraum (4, 10) eingebracht und Energie (E) zugeführt wird,
so dass sich das Trägermaterial zersetzt und das Beschichtungsmaterial über eine Gasphase auf den inneren Oberflächen (5, 11) niederschlägt,
**dadurch gekennzeichnet, dass**
als Trägermaterial ein Polymer verwendet wird.

2. Verfahren nach Anspruch 1,
**dadurch gekennzeichnet, dass**
als Trägermaterial ein Polyurethan verwendet wird.

3. Verfahren nach Anspruch 1 oder 2,
**dadurch gekennzeichnet, dass**
das Beschichtungsmaterial in dem Trägermaterial vorhanden ist.

4. Verfahren nach Anspruch 3,
**dadurch gekennzeichnet, dass**
das Beschichtungsmaterial in Form von Nanopartikeln vorhanden ist.

5. Verfahren nach Anspruch 1 oder 2,
**dadurch gekennzeichnet, dass**
das Beschichtungsmaterial metallisch ist.

6. Verfahren nach Anspruch 1, 2, 3, 4 oder 5,
**dadurch gekennzeichnet, dass**
das Beschichtungsmaterial keramisch ist.

7. Verfahren nach Anspruch 1,
**dadurch gekennzeichnet, dass**
eine Durchgangsöffnung beschichtet wird.

8. Verfahren nach Anspruch 1, 5 oder 7,
**dadurch gekennzeichnet, dass**
eine Innenalitierung erfolgt.

9. Verfahren nach Anspruch 1, 2, 3, 4, 5, 6, 7 oder 8,
**dadurch gekennzeichnet, dass**
das Beschichtungsmaterial aus mehreren Elementen besteht.

10. Verfahren nach Anspruch 1, 2 oder 3,
**dadurch gekennzeichnet, dass**
das Trägermaterial Grobmaterial (19) enthält, das aus Mikrometer großen Partikeln besteht.

11. Verfahren nach Anspruch 10,
**dadurch gekennzeichnet, dass**
das Grobmaterial (19) thermisch stabiler ist als das Beschichtungsmaterial.

12. Verfahren nach Anspruch 10 oder 11,
**dadurch gekennzeichnet, dass**
das Grobmaterial (19) keramisch ist.

13. Verfahren nach Anspruch 10,
**dadurch gekennzeichnet, dass**
das Grobmaterial Aluminiumoxid ist.

14. Verfahren nach Anspruch 1 oder 10,
**dadurch gekennzeichnet, dass**
eine mäanderförmige Kühlkonfiguration (192, 195) einer Gasturbinenkomponente (120, 130) beschichtet wird.

15. Verfahren nach Anspruch 10 oder 14,
**dadurch gekennzeichnet, dass**
die Grobteilchen (19) so abgeschieden werden, dass sie (19) aus einer Oberfläche (25) einer Beschichtung (16) hervorragen.

## Claims

1. Method for the coating of an inner surface (5, 11) of a component (1) with a cavity (4, 10), in which a coating material, which has a specific evaporating temperature, and a carrier material, which is thermally stable at room temperature and thermally unstable at the evaporating temperature of the coating material and which contains the coating material, are used, a mixture of carrier material and coating material being introduced into the cavity (4, 10) and energy (E) being supplied, so that the carrier material decomposes and the coating material is deposited via a gas phase on the inner surfaces (5, 11), **characterized in that** a polymer is used as the carrier material.

2. Method according to Claim 1, **characterized in that** a polyurethane is used as the carrier material.

3. Method according to Claim 1 or 2, **characterized in that** the coating material is present in the carrier material.

4. Method according to Claim 3, **characterized in that** the coating material is in the form of nanoparticles.

5. Method according to Claim 1 or 2, **characterized in that** the coating material is metallic.

6. Method according to Claim 1, 2, 3, 4 or 5 **characterized in that** the coating material is ceramic.

7. Method according to Claim 1, **characterized in that** a through-opening is coated.

8. Method according to Claim 1, 5 or 7, **characterized in that** an inner alitizing is performed.

9. Method according to Claim 1, 2, 3, 4, 5, 6, 7 or 8 **characterized in that** the coating material comprises a number of elements.

10. Method according to Claim 1, 2 or 3 **characterized in that** the carrier material contains coarse material (19), which comprises particles of micrometer size.

11. Method according to Claim 10, **characterized in that** the coarse material (19) is thermally more stable than the coating material.

12. Method according to Claim 10 or 11, **characterized in that** the coarse material (19) is ceramic.

13. Method according to Claim 10, **characterized in that** the coarse material is aluminium oxide.

14. Method according to Claim 1 or 10, **characterized in that** a meandering cooling configuration (192, 195) of a gas turbine component (120, 130) is coated.

15. Method according to Claim 10 or 14, **characterized in that** the coarse particles (19) are deposited in such a way that they (19) protrude from a surface (25) of a coating (16).

## Revendications

1. Procédé de revêtement d'une surface (5, 11) intérieure d'un élément (1) ayant une cavité (4, 10),
dans lequel on utilise une matière de revêtement,
qui a une température d'évaporation déterminée et un matériau support stable thermiquement à la température ambiante et instable thermiquement à la température d'évaporation de la matière de revêtement,
dans lequel on introduit dans la cavité (4,10) un mélange du matériau support et de la matière de revêtement et on y apporte de l'énergie (E),
de sorte que le matériau support se décompose et que la matière de revêtement se dépose en phase gazeuse sur la surface (5,11) intérieure,
**caractérisé en ce que**
on utilise un polymère comme matériau support.

2. Procédé suivant la revendication 1,
**caractérisé en ce qu'**on utilise un polyuréthane comme matériau support.

3. Procédé suivant la revendication 1 ou 2,
**caractérisé en ce que** la matière de revêtement est présente dans le matériau support.

4. Procédé suivant la revendication 3,
**caractérisé en ce que** la matière de revêtement est présente sous la forme de nanoparticules.

5. Procédé suivant la revendication 1 ou 2,
**caractérisé en ce que** la matière de revêtement est métallique.

6. Procédé suivant la revendication 1, 2, 3, 4 ou 5,
**caractérisé en ce que** la matière de revêtement est céramique.

7. Procédé suivant la revendication 1,
**caractérisé en ce qu'**on revêt une ouverture de passage.

8. Procédé suivant la revendication 1, 5 ou 7,
**caractérisé en ce que** l'on effectue une aluminisation intérieure.

9. Procédé suivant la revendication 1, 2, 3, 4, 5, 6, 7, 8,
**caractérisé en ce que** la matière de revêtement est constitué de plusieurs éléments.

10. Procédé suivant la revendication 1, 2 ou 3,
**caractérisé en ce que** le matériau support contient du matériau (19) grossier qui est constitué de particules de la grosseur du micron.

11. Procédé suivant la revendication 10,
**caractérisé en ce que** le matériau (19) grossier est plus stable thermiquement que la matière de revêtement.

12. Procédé suivant la revendication 10 ou 11
**caractérisé en ce que** le matériau (19) grossier est céramique.

13. Procédé suivant la revendication 10,
**caractérisé en ce que** le matériau (19) grossier est de l'oxyde d'aluminium.

14. Procédé suivant la revendication 1 ou 10,
**caractérisé en ce qu'**on revêt une configuration (192, 195) de refroidissement sinueuse d'un élément (120, 130) de turbine à gaz.

15. Procédé suivant la revendication 10 ou 14,
**caractérisé en ce que** l'on dépose les particules (19) grossières,
de manière à ce qu'elles fassent saillie d'une surface (25) d'un revêtement (16).
